Europäisches Patentamt

European Patent Office

Office européen des brevets

(11) Veröffentlichungsnummer: **0 281 649**
**A1**

(12) **EUROPÄISCHE PATENTANMELDUNG**

(21) Anmeldenummer: **87103415.3**

(22) Anmeldetag: **10.03.87**

(51) Int. Cl.⁴: **C08K 5/15 , C08L 27/04 ,**
**//(C08L27/04,67:04)**

(43) Veröffentlichungstag der Anmeldung:
**14.09.88 Patentblatt 88/37**

(84) Benannte Vertragsstaaten:
**AT BE DE FR**

(71) Anmelder: **MÜANYAGIPARI KUTATO INTEZET**
**Hungária körut 114**
**Budapest XIV(HU)**

(72) Erfinder: **Pazonyi, Tamás, Dr.**
**Hattyu u. 3/b**
**H-1015 Budapest(HU)**
Erfinder: **Balajthy, Zoltán**
**Szövetség u. 28.**
**H-1074 Budapest(HU)**
Erfinder: **Déri, Miklós, Dr.**
**Istvántelki u. 35**
**H-1045 Budapest(HU)**
Erfinder: **Perényi, Agnes**
**Rajk L. u. 9.**
**H-1136 Budapest(HU)**
Erfinder: **Cselik, György**
**Eperjes u. 58.**
**H-1204 Budapest(HU)**
Erfinder: **Klebán, János**
**Mogyoródi u. 71.**
**H-1148 Budapest(HU)**
Erfinder: **Lakner, Endre**
**Németvölgyi u. 68**
**H-1124 Budapest(HU)**
Erfinder: **Markó, Richárd**
**Vadalma u. 11.**
**H-1028 Budapest(HU)**
Erfinder: **Pukánszky, Béla**
**Hernád u. 35.**
**H-1078 Budapest(HU)**
Erfinder: **Riczkó, András**
**Budafoki u. 81.**
**H-1117 Budapest(HU)**
Erfinder: **Vajda, Róbert**
**Bakáts u. 1/3**
**H-1093 Budapest(HU)**

(74) Vertreter: **Hansen, Bernd, Dr.rer.nat. et al**
**Hoffmann, Eitle & Partner Patentanwälte**
**Arabellastrasse 4**
**D-8000 München 81(DE)**

(54) **Verfahren zur Stabilisierung von Vinylchlorid und/oder Vinylidenchlorid enthaltenden Polymeren.**

(57) Die Erfindung betrifft ein Verfahren zur Stabilisierung von Homo-und Copolymeren auf der Basis von Vinylchlorid und/oder Vinylidenchlorid gegen die schädigende Wirkung energiereicher Strahlen (Röntgen-, α-, β- γ-Strahlen).

Für das erfindungsgemäße Verfahren ist charakteristisch, daß man dem zu stabilisierenden Polymer auf 100 Teile gerechnet 1-10 Masseteile Epoxyverbindung und 1-10 Masseteile Polylacton zusetzt, das Gemisch in bekannter Weise homogenisiert und dann zu dem gewünschten Produkt verarbeitet.

## Verfahren zur Stabilisierung von Vinylchlorid und/oder Vinylidenchlorid enthaltenden Polymeren

Die Erfindung betrifft ein Verfahren zur Stabilisierung von Homo-beziehungsweise Copolymeren auf der Basis von Poly(vinylchlorid) und/oder Poly(vinylidenchlorid) gegen die schädigende Wirkung von energiereichen Strahlen (Röntgen-, $\alpha$-, $\beta$-, $\gamma$-Strahlen).

Es ist bekannt, daß Poly(vinylchlorid), Poly(vinylidenchlorid) (PVC bzw. PVDC) sowie Vinylchlorid und/oder Vinylidenchlorid enthaltende Copolymere durch Wärme, Licht und insbesondere durch energiereiche Strahlen, wie Röntgen-, $\alpha$-, $\beta$-und $\gamma$-Strahlen, degradiert werden. Die Lichtstabilisierung von PVC, PVDC und der vinyl-beziehungsweise vinylidenchloridhaltigen Polymeren hat eine sehr ausgedehnte Literatur. Hinsichtlich der Stabilisierung gegen die degradierende Wirkung energiereicher Strahlen sind die Kenntnisse wesentlich bescheidener. Die Stabilisierung der genannten Polymeren gegen die aufgeführten Strahlenarten ist in erster Linie für die Stabilisierung der aus diesen Polymeren hergestellten ärztlichen und therapeutischen Instrumente von Bedeutung. Die aus Kunststoff hergestellten und steril benutzten ärztlichen Instrumente werden nämlich am einfachsten und deshalb immer verbreiteter durch Strahlung sterilisiert. Die dazu geeignete absorbierte Dosis von $1,5\text{-}3.10^4$ gray (Gy) degradiert jedoch die in herkömmlicher Weise stabilisierten, Vinylchlorid und Vinylidenchlorid enthaltenden Polymeren stark. Da PVC, PVDC sowie die Vinylchlorid und/oder Vinylidenchlorid enthaltenden Polymere sowohl in harter Form als auch Weichmacher enthaltend zur Herstellung ärztlicher Instrumente ausgezeichnet geeignet sind, waren zahlreiche Bestrebungen darauf gerichtet, diese Polymeren gegen die zum Sterilisieren verwendeten harten Strahlen zu stabilisieren.

Albarino und Otocka (J. Appl. Polym. Sci. 16/1972, S. 61-68) haben zur Stabilisierung vinylchloridhaltiger Polymer gegen die verfärbende Wirkung energiereicher Strahlen Epoxyverbindungen vorgeschlagen. Die Epoxygruppe bindet zunächst die bei der Zersetzung freiwerdende und die weitere Zerstörung katalysierende Salzsäure in Form einer Chlorhydroxyverbindung, die später einen cyclischen Äther bildet, welcher fähig ist, die bei der Degradierung entstehenden freien Radikale zu addieren.

Szymanszki (J. Appl. Polym. Sci. 23/1979/, S. 791-795) schlägt zur Stabilisierung von PVC gegen -Strahlen ein Gemisch aus Calcium-zink-laurat und epoxydierten Verbindungen, ferner ein Gemisch aus Magnesium-zink-stearat und epoxydierten Verbindungen vor. Ebenfalls zur Stabilisierung von Vinylchloridverbindungen gegen $\gamma$-Strahlen werden an anderer Stelle (Lerke et al., J. Appl. Polym. Sci. 29/1983/, S. 501-511) Epoxyverbindungen, unter anderem epoxydiertes Rizinus-und Sojaöl erwähnt. Ogata et al. (J. Appl. Polym. Sci. 28/1983/, S. 699) erwähnen die gute Strahlenbeständigkeit von Epoxygruppen enthaltende Polyamid.

Wie eigene Versuche ergaben, gewährleisten diese bisher bekannten Verfahren jedoch nur eine mäßige Stabilität; nach längerer Zeit oder durch Wärmeeinwirkung verfärben sich diese Produkte tabakbraun.

Ziel der Erfindung ist es, PVC, PVDC, ferner Vinylchlorid und/oder Vinylidenchlorid enthaltende Polymere gegen die schädigende Wirkung energiereicher Strahlen besser zu stabilisieren, als dies bisher möglich war.

Die Erfindung beruht auf der überraschenden Erkenntnis, daß das gestellte Ziel erreicht werden kann, wenn man als Stabilisator neben Epoxyverbindungen auch Polyacetone zusetzt. Die Polylactonverbindungen zeigen in der stabilisierenden Wirkung mit den Epoxyverbindungen einen starken Synergismus, die auf diese Weise erzielte Schutzwirkung übertrifft die Schutzwirkung bekannter, Epoxyverbindungen enthaltender Kombinationen, zum Beispiel der Kombination von Epoxyverbindungen mit Fettsäuren (US-PS 2 590 059) oder der Kombination von Epoxyverbindungen mit Calcium-beziehungsweise Zinksalzen (belgische Patentschrift Nr. 790 350).

Erfindungsgemäß geht man so vor, daß man dem zu stabilisierenden Polymer - welches gegebenenfalls die üblichen Zusätze enthält - 1-10 Masseteile Epoxyverbindungen und 1-10 Masseteile Polylacton zusetzt und das Gemisch in bekannter Weise homogenisiert. Das homogenisierte Gemisch wird dann mittels bekannter Verfahren zu den gewünschten Endprodukten verarbeitet.

Durch das erfindungsgemäße Verfahren ist es möglich, eine Kunststoffkomposition herzustellen, die gegen energiereiche Strahlen (Röntgen-, $\alpha$-, $\beta$-, $\gamma$-Strahlen) entsprechend stabilisiert ist.

Die nur die üblichen, verhältnismäßig wenig wirksamen ärztlichen Wärme-und Lichtstabilisatoren enthaltenden Polymere verfärben sich durch die Einwirkung einer Strahlendosis von $1,5\text{-}3.10^4$ Gy in einem Grade, der dem Skalenwert 6-7 der (im Standard 40.023-73 des ungarischen Ministeriums für Industrie vorgeschriebenen) Synmero-Skala entspricht. Ein mit epoxydiertem Sojaöl stabilisiertes Polymer verfärbt sich durch die gleiche Strahlendosis nur bis zum Wert 4 der Farbskala.

Bei Zusatz von Polycaprolacton allein neben den üblichen Wärme-und Lichtstabilisatoren entspricht die Verfärbung dem Skalenwert 3-4, jedoch mit fortschreitender Lagerungsdauer ändert sich die Farbe spontan und kann den Verfärbungsgrad des unstabilisierten Produktes erreichen. Eine nur sehr schwache Verfärbung läßt sich nur durch die gleichzeitige Verwendung von Epoxyverbindungen und Polycaprolacton erreichen; derart stabilisierte Produkte verfärben sich bis zum Skalenwert 2-3 und behalten diese Farbe dann unverändert bei.

Es ist bemerkenswert, daß das synergistische Stabilisatorsystem nicht nur in schwach, sondern auch in stark stabilisierten (zum Beispiel mit organischen Zinnverbindungen stabilisierten) Systemen wirksam ist, wobei ein noch niedrigerer Skalenwert der Verfärbung resultiert.

Als Epoxykomponente und als Lactonkomponente werden zweckmäßig Verbindungen gewählt, die sowohl mit hartem wie auch mit weichmacherhaltigem PVC, PVDC beziehungsweise Vinylchlorid und/oder Vinylidenchlorid enthaltenden Polymeren verträglich sind. Derartige Epoxyverbindungen sind zum Beispiel epoxydiertes Rizinusöl, epoxydiertes Sojaöl und Epoxygruppen enthaltendes Polyamid. Geeignete Polylactone sind zum Beispiel Poly( $\epsilon$-caprolacton) (PCL), Poly($\alpha$-methyl-$\alpha$-n-propyl-$\beta$-propiolacton) (PPL) und Poly-($\alpha$-methyl-$\alpha$-äthyl-$\beta$-propiolacton) (MEPL). Ein besonderer Vorteil dieser Stabilisatorsysteme besteht darin, daß sie physiologisch unbedenklich sind und deshalb zur Stabilisierung des Materials ärztlicher und therapeutischer Geräte und in der Lebensmittelindustrie verwendeter Gerätschaften verwendet werden können. Die mit dem erfindungsgemäßen Verfahren hergestellten Produkte bewahren ihre ursprünglichen Eigenschaften auch nach einer energiereichen Bestrahlung oder im warmen Zustand.

Die Erfindung wird an Hand der folgenden Beispiele näher erläutert.

## Beispiel 1

Zum Zweck der Herstellung eines zur Strahlensterilisation geeigneten Produktes aus spritzgegossenem Hart-PVC werden 100 Masseteile eines pulverförmigen Suspensions-PVC (K-Wert 58), 4 Masseteile Calcium-zink-laurat als Stabilisator, 1 Masseteil Stearin, 2 Masseteile Zinkoxyd, ferner 4 Masseteile epoxydiertes Sojaöl und 5 Masseteile PCL in einem Schnellmischer bis zum Erreichen einer Temperatur von 120 °C miteinander vermischt. Das abgekühlte trockene Gemisch wird in einem Extruder bei 150 °C granuliert. Aus dem Granulat werden im Spritzguß bei 190 °C zur Strahlensterilisation geeignete Produkte hergestellt.

## Beispiel 2

Zur Herstellung eines für die Strahlensterilisation geeigneten Schlauches aus Weich-PVC werden 100 Masseteile pulverförmiges Suspensions-PVC (K-Wert 70), 54 Masseteile Diisooctylphthalat ärztlicher Qualität als Weichmacher, 4 Masseteile Calcium-zink-laurat als Stabilisator, 0,5 Masseteile Stearin, ferner 3 Masseteile epoxidiertes Rizinusöl und 4 Masseteile PCL in einem Schnellmischer bis zum Erreichen einer Temperatur von 110 °C miteinander vermischt. Aus dem trockenen Gemisch wird bei 145 °C mit dem Extruder ein Granulat hergestellt. Aus dem Granulat wird dann bei 160 °C ein Schlauch extrudiert, der durch Bestrahlung sterilisiert werden kann.

## Beispiel 3

Aus Vinylchlorid und 20 % Vinylacetat bestehendem Polymer wird Spritzgußmaterial hergestellt, indem man zu 100 Masseteilen Copolymer 4 Masseteile Ca-Mg-Zn-Laurat, 1 Masseteil Titandioxyd, 0,02 Masseteile Gasruß, 0,5 Masseteile Stearin, ferner 5 Masseteile epoxydiertes Sojaöl und 2 Masseteile PPL gibt und das Gemisch in einem Kneter bei 130 °C zu einer homogenen Masse knetet. Die Masse wird dem Fülltrichter eines Extruders zugeführt und bei 150 °C zu Granulat verarbeitet. Aus diesem Granulat spritzgegossene Produkte können durch Strahlen sterilisiert werden.

## Beispiel 4

Aus einem Vinylidenchlorid/Vinylchlorid-Copolymer, das 13,5 % Vinylchlorid enthält, wird eine mittels Strahlen sterilisierbare Schrumpffolie hergestellt. Zu 100 Masseteilen Copolymer werden 2 Masseteile Ca-Mg-Zn-Laurat als Stabilisator und 0,2 Masseteile Polyäthylenwachs, ferner 2 Masseteile epoxydiertes Sojaöl und 8 Masseteile MEPL gegeben. Das Gemisch wird in einem über eine Austragschnecke verfügenden Innenmischer bei 160 °C zu einer homogenen Masse geknetet. Die Masse wird in einen mit einem Streckwerk und einem Spannrahmen ausgerüsteten Extruder eingespeist und bei 160 °C Werkzeugtemperatur zu einer Platte gespritzt. Aus dieser wird mittels des Streckwerkes und des Spannrahmens bei 140 °C Schrumpffolie gezogen.

Beispiel 5

Zur Herstellung von durch Strahlen sterilisierbaren Kunstfasern beziehungsweise Textilien werden zu 100 Masseteilen Vinylidenchlorid/Acrylnitril-Copolymer (SARAN F, Dow Chemical Co.) 3 Masseteile epoxydiertes Polyamid und 5 Masseteile PLC gegeben. Das Gemisch wird im Innenmischer bei 220 °C zu einer homogenen Masse geknetet. Aus der Masse wird bei 230 °C Granulat extrudiert und dieses wird dann bei 185 °C auf einem Extruder zu Kunstfasern verarbeitet.

Beispiel 6

Zur Herstellung von durch Strahlen sterilisierbaren spritzgegossenen Produkten aus halbhartem PVC werden zu 100 Masseteilen pulverförmigem Suspensions-PVC (K-Wert 54) 14 Masseteile Diisooctylphthalat als Weichmacher, 1 Masseteil Dibutyl-zinn-thioglycolat als Wärmestabilisator, 0,2 Masseteile Polyäthylenwachs, ferner 2 Masseteile PCL und 8 Masseteile epoxydiertes Rizinusöl gegeben. Das Gemisch wird im Schnellmischer - bis zu einer Temperatur von 140 °C - so lange homogenisiert, bis das Gemisch gut streubar und trocken ist. Das trockene Gemisch wird in einem Doppelschneckenextruder bei 180-200 °C granuliert. Das Granulat wird im Spritzguß zu dem gewünschten Produkt verarbeitet.

Beispiel 7 (Vergleichsbeispiel)

Man stellt das Gemisch gemäß Beispiel 1 her, setzt jedoch statt der dort verwendeten 4 Masseteile epoxydierten Sojaöls und 5 Masseteile PCL im ganzen 9 Masseteile epoxydiertes Sojaöl ein. Ein weiteres Gemisch wird mit dem Unterschied bereitet, daß es statt der 9 Masseteile epoxydierten Sojaöls 9 Masseteile PCL enthält. Als drittes Gemisch wird das nach Beispiel 1 hergestellte untersucht.

Die drei Gemische werden auf die in dem Standard NIMSZ 400.223-73 vorgeschriebene Weise auf ihre Farbstabilität bei Einwirkung energiereicher Strahlen untersucht.

| Gemisch | Grad der Verfärbung nach der Synmero-Skala |
|---|---|
| nur epoxydiertes Sojaöl enthaltend | 4 |
| nur PCL enthaltend | 3 |
| erfindungsgemäß Beispiel 1 | 2 |

Daraus ist ersichtlich, daß die Verfärbung des Polymers durch das erfindungsgemäße Verfahren sehr gering gehalten werden kann, das Polymer ist stabiler.

**Ansprüche**

1. Verfahren zur Stabilisierung von gegebenenfalls Zusatzstoffe, vorzugsweise Weichmacher, Pigmente, Wärmestabilisatoren, enthaltenden Vinylchlorid-und/oder Vinylidenchlorid-Homopolymeren und Copolymeren gegen die schädigende Wirkung energiereicher Strahlen, dadurch gekenzneichnet, daß man dem zu stabilisierenden Polymer 1-10 Masseteile Epoxyverbindung und 1-10 Masseteile Polylacton zusetzt, das Gemisch in bekannter Weise homogenisiert und zu dem gewünschten Endprodukt verarbeitet.

2. Verfahren nach Anspruch 1, dadurch gekennzeichnet, daß man als Epoxyverbindung epoxydiertes Sojaöl verwendet.

3. Verfahren nach Anspruch 1, dadurch gekennzeichnet, daß man als Polylacton Poly( ε-caprolacton), Poly(α-methyl-α-n-propyl-β-propiolacton), Poly(α,α-dimethyl-β-propiolacton) oder Poly(α-methyl-α-äthyl-dimethyl-β-propiolacton) verwendet.

6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 111 829 (AMERICAN HOECHST CORP.)<br>* Anspruch 6 * | 1 | C 08 K    5/15<br>C 08 L   27/04 //<br>(C 08 L   27/04<br>C 08 L   67:04 ) |
| | --- | | |
| A | US-A-3 274 143 (F. HOSTETTLER et al.)<br>* Anspruch 1 * | 1 | |
| | ----- | | |

| | |
|---|---|
| | RECHERCHIERTE SACHGEBIETE (Int. Cl.4) |
| | C 08 K<br>C 08 L |

Der vorliegende Recherchenbericht wurde für alle Patentansprüche erstellt.

| Recherchenort | Abschlußdatum der Recherche | Prüfer |
|---|---|---|
| DEN HAAG | 06-11-1987 | HOFFMANN K.W. |